# EUROPEAN PATENT SPECIFICATION

(11) **EP 4 596 381 B1**
(45) Date of publication and mention of the grant of the patent: **08.04.2026**
(21) Application number: 24219833.1
(22) Date of filing: 13.12.2024
(51) Int. Cl.: B62J 23/00, B62K 11/04, B60B 7/00, F16D 65/00, B60B 7/06

(54) **SADDLE-RIDE VEHICLE**
SATTELFAHRZEUG
VÉHICULE À MONTURE DE SELLE

(30) Priority: 30.01.2024 JP 2024012305
(43) Date of publication of application: 06.08.2025
(73) Proprietor: HONDA MOTOR CO., LTD., Tokyo 105-8404 (JP)
(72) Inventor: TAKANOHASHI, Yusuke, Tokyo, 107-8556 (JP); NISHIWAKI, Daisuke, Tokyo, 107-8556 (JP)
(74) Representative: Weickmann & Weickmann PartmbB

(56) References cited:
- EP-A1- 4 023 902
- CN-A- 109 073 049
- CN-U- 201 721 563
- CN-U- 207 416 437
- JP-A- H0 820 319
- JP-B2- 4 730 803
- US-A- 4 550 809
- US-A1- 2008 053 762

## Description

### BACKGROUND

### Technical Field

The present invention relates to a saddle-ride vehicle.

### Related Art

Conventionally, a saddle-ride vehicle provided with a cover structure that covers a wheel is known (see, for example, JP 8-20319 A). In JP 8-20319 A, a brake disc is supported on a hub of a wheel, and a heat dissipation member having a shape covering the hub from the side is provided between the hub and the brake disc. In JP 8-20319 A, the heat dissipation member having a diameter smaller than that of the brake disc facilitates dissipation of frictional heat generated in the brake disc to cool the brake disc.
JP H08 20319 A discloses a saddle-ride vehicle according to the preamble of independent claim 1.
CN 109 073 049 A discloses an in-vehicle type two-speed transmission device equipped with a simple structure that can be integrated into the interior of a wheel hub. The transmission device can quickly transmit the driving force of the sun gear to the wheel hub through the planetary gear part, and can easily achieve two-speed shifting through the clutch-part.

### SUMMARY

In the technique described in JP 8-20319 A, the brake disc is cooled by heat dissipation, but the heat dissipated from the brake disc is transferred to the wheel, and the heat transferred through the wheel may affect a tire.

The present invention has been made in view of the above circumstances, and an object of the present invention is to provide a saddle-ride vehicle capable of easily shielding heat dissipation of a disc brake from a wheel and suppressing an influence on a tire.

The present invention provides a saddle-ride vehicle according to the subject matter of independent claim 1.

It is possible to provide a saddle-ride vehicle capable of easily shielding heat dissipation of a disc brake from a wheel and suppressing an influence on a tire.

### BRIEF DESCRIPTION OF DRAWINGS

FIG. 1 is a side view of a saddle-ride vehicle according to an embodiment of the present invention;
FIG. 2 is a right side view of the saddle-ride vehicle in a state where a front fender is removed, illustrating the periphery of a front wheel;
FIG. 3 is a right side view of the front wheel illustrating a state in which a brake disc is attached;
FIG. 4 is a right side view of the front wheel illustrating a state in which the brake disc on a right side is removed from FIG. 3;
FIG. 5 is a right side view of the front wheel illustrating a state in which wheel covers and brake discs on both left and right sides are removed from FIG. 4;
FIG. 6 is a right side view of the right wheel cover;
FIG. 7 is a perspective view of the right wheel cover as viewed from the right rear;
FIG. 8 is a left side view of the right wheel cover;
FIG. 9 is a perspective view of the right wheel cover as viewed from the left rear;
FIG. 10 is an enlarged perspective view of a fastening member accommodating portion of an outer fastening portion;
FIG. 11 is a front view of the wheel covers illustrating an assembled state of the wheel covers; and
FIG. 12 is an enlarged perspective view of a contact surface of the outer fastening portion.

### DETAILED DESCRIPTION

Hereinafter, embodiments of the present invention will be described with reference to the drawings. Note that, in the description, directions such as front, rear, left, right, up, and down are identical to directions with respect to a vehicle body, unless otherwise specified.

In addition, reference sign FR in each drawing indicates a front side of the vehicle body, reference sign UP indicates an upper side of the vehicle body, and reference sign LH indicates a left side of the vehicle body.

### [Embodiment]

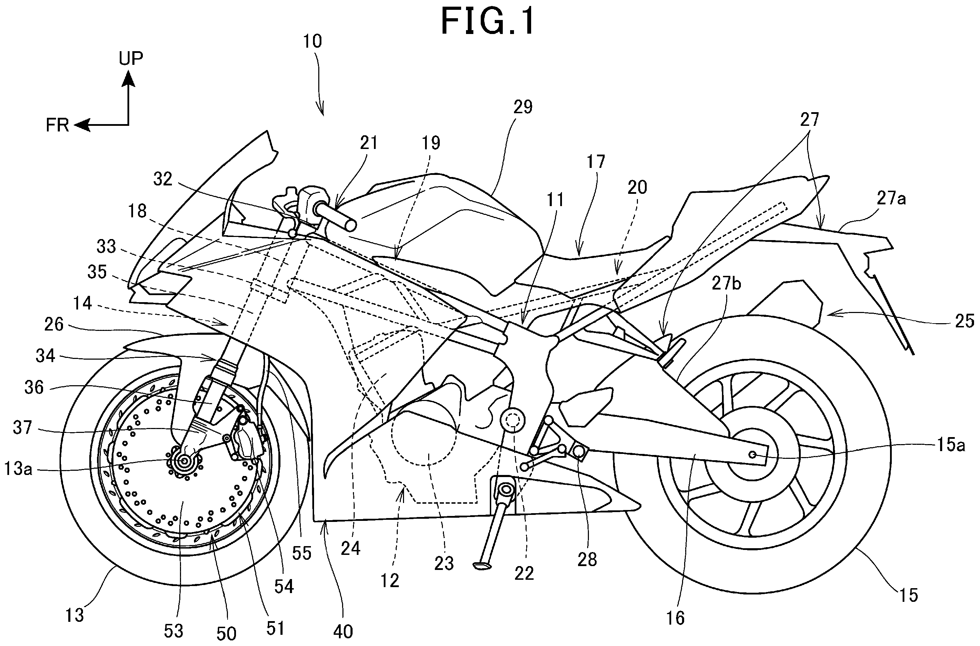

FIG. 1 is a side view of a saddle-ride vehicle 10 according to an embodiment of the present invention.

The saddle-ride vehicle 10 is a vehicle including a vehicle body frame 11, a power unit 12, which is supported by the vehicle body frame 11, a front fork 14, which supports a front wheel 13 to be steerable, a swing arm 16, which supports a rear wheel 15, and a seat 17 for a rider.

The saddle-ride vehicle 10 is a vehicle on which a rider sits to straddle the seat 17. The seat 17 is provided above the rear portion of the vehicle body frame 11.

The vehicle body frame 11 includes a head pipe 18 provided at the front end portion of the vehicle body frame 11, a front frame 19 located behind a head pipe 18, and a rear frame 20 located behind the front frame 19. The front end portion of the front frame 19 is connected to the head pipe 18.

The seat 17 is supported by the rear frame 20.

The front fork 14 is supported by the head pipe 18 so as to steerable to the left and right. The front wheel 13 is supported by an axle 13a, which is provided at the lower end portion of the front fork 14. A steering handlebar 21 to be gripped by the rider is attached to the upper end portion of the front fork 14.

The swing arm 16 is supported by a pivot shaft 22 supported by the vehicle body frame 11.

The pivot shaft 22 is a shaft extending horizontally in a vehicle width direction. The pivot shaft 22 is inserted through the front end portion of the swing arm 16. The swing arm 16 swings upwards and downwards about the pivot shaft 22.

The rear wheel 15 is supported by an axle 15a provided at the rear end portion of the swing arm 16.

The power unit 12 is disposed between the front wheel 13 and the rear wheel 15, and is supported by the vehicle body frame 11.

The power unit 12 is an internal combustion engine. The power unit 12 includes a crankcase 23 and a cylinder unit 24 that accommodates a reciprocating piston. An exhaust device 25 is connected to an exhaust port of the cylinder unit 24.

Output of the power unit 12 is transmitted to the rear wheel 15 by a driving force transmission member that connects the power unit 12 and the rear wheel 15.

In addition, the saddle-ride vehicle 10 also includes a front fender 26 covering the front wheel 13 from above, a rear fender 27 covering the rear wheel 15 from above, foot rests 28 on which the rider places his/her feet, and a fuel tank 29 storing fuel used by the power unit 12.

The front fender 26 is attached to the front fork 14. The rear fender 27 and the foot rests 28 are each provided below the seat 17. The fuel tank 29 is supported by the vehicle body frame 11.

In the present embodiment, the rear fender 27 includes a first rear fender 27a that is supported by the rear of the seat 17 and covers the rear wheel 15 from above, and a hugger fender (second rear fender) 27b that is supported by the swing arm 16 and covers the rear wheel 15 from above on the front side.

The front fork 14 includes a steering stem (not illustrated) inserted through the head pipe 18. The steering stem is pivotally supported by the head pipe 18. A top bridge 32 is provided at the upper end of the steering stem. A bottom bridge 33 is provided at the lower end of the steering stem. A pair of left and right fork tubes 34 are supported by the top bridge 32 and the bottom bridge 33. The fork tube 34 extends forward and downward. The fork tube 34 of the present embodiment is a telescopic shock absorber, and incorporates a spring and a damper.

Specifically, the fork tube 34 includes an upper tube 35 supported by the top bridge 32 and the bottom bridge 33, a lower tube 36 disposed below the upper tube 35 and slidably supported by the upper tube 35, and an axle support member 37 fixed to the lower end portion of the lower tube 36.

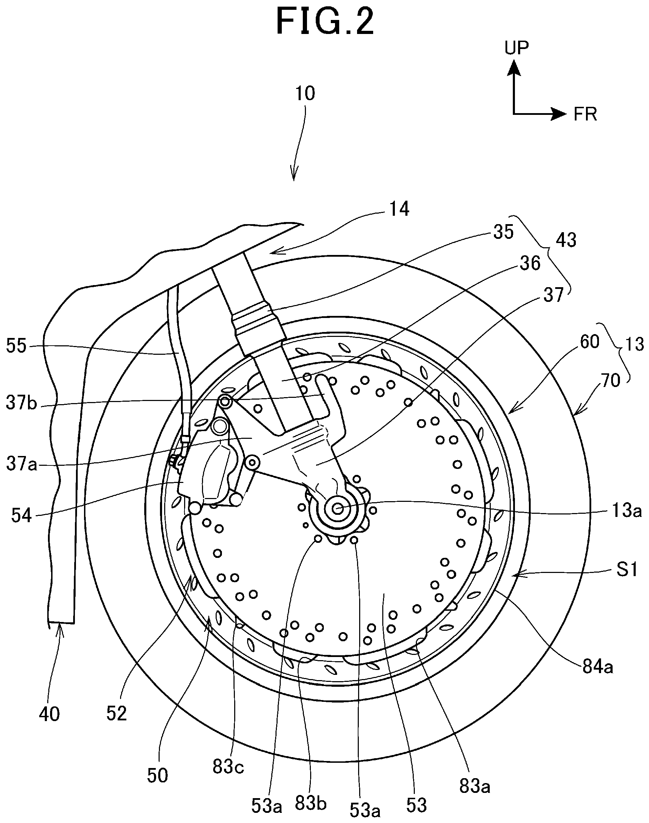

The axle support member 37 integrally includes a caliper bracket portion 37a (see FIG. 2) and a fender support portion 37b (see FIG. 2). The axle 13a is inserted through the left and right axle support members 37. The axle 13a is supported in a state of spanning the left and right axle support members 37. The front wheel 13 is rotatably supported via the axle 13a by the front fork 14. The front wheel 13 is disposed between the pair of left and right fork tubes 34.

The front fork 14 of the present embodiment includes the steering stem (not illustrated), the top bridge 32, the bottom bridge 33, and the pair of left and right fork tubes 34.

The saddle-ride vehicle 10 includes a vehicle body cover 40. The vehicle body cover 40 covers a vehicle body including the vehicle body frame 11, the power unit 12, and the like.

FIG. 2 is a right side view of the saddle-ride vehicle 10 in a state where the front fender 26 is removed, illustrating the periphery of the front wheel 13.

The front wheel 13 is braked by a front wheel braking device 50. In the present embodiment, the front wheel braking device 50 is a double disc type including a disc brake 51 (see FIG. 1) on the left side (one side in the vehicle width direction) and a disc brake 52 (see FIG. 2) on the right side (the other side in the vehicle width direction).

The left and right disc brakes 51 and 52 have the same basic structure. Each of the left and right disc brakes 51 and 52 includes a brake disc 53 attached to the front wheel 13 and a brake caliper 54 which can clamp the brake disc 53 to apply braking.

The brake disc 53 of the present embodiment is formed in a disc shape. The brake disc 53 of the present embodiment is formed to have a diameter larger than half the outer diameter of the front wheel 13. A plurality of fixing holes 53a are formed at the radial center portion of the brake disc 53. In the present embodiment, six fixing holes 53a are formed. The fixing holes 53a are formed at equal intervals in a circumferential direction. The brake disc 53 is attached to the wheel 60 of the front wheel 13 by a bolt (not illustrated) inserted through the fixing hole 53a.

The brake caliper 54 is supported by a caliper bracket portion 37a of the axle support member 37. A brake hose 55 is connected to the brake caliper 54.

Note that, the rotational speed of the front wheel 13 is detected by a wheel speed detection device (not illustrated). The wheel speed detection device includes an annular pulser ring that rotates integrally with the front wheel 13, and a pickup sensor that detects the rotation of the pulser ring.

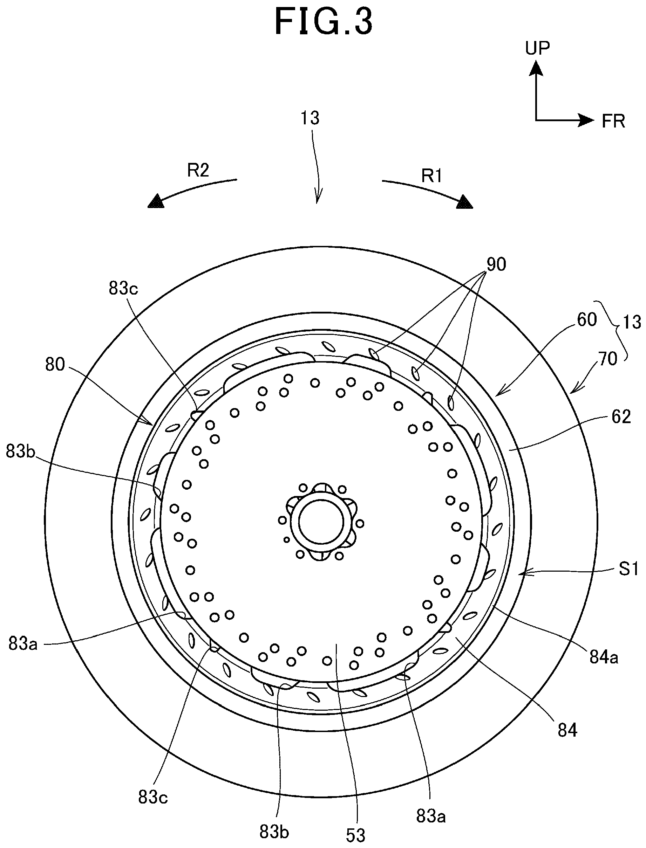

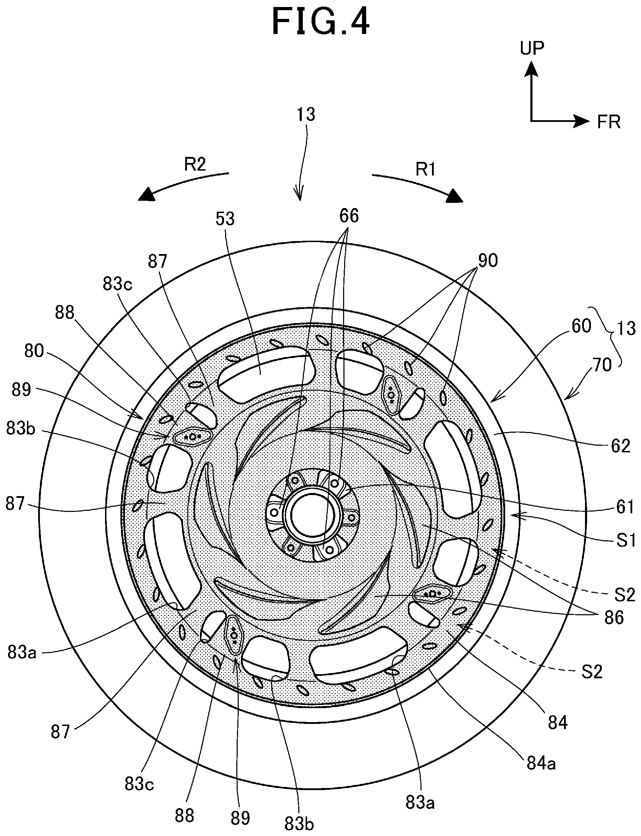

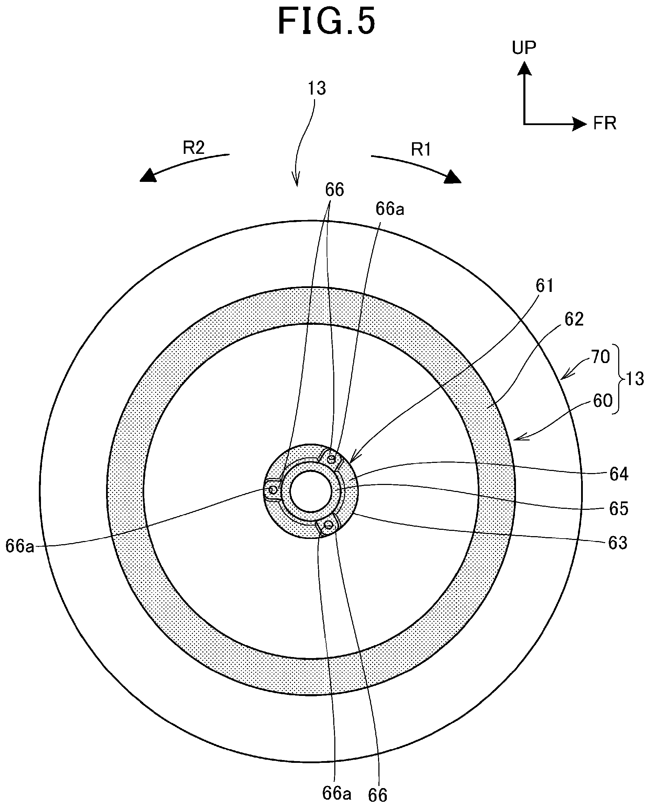

FIG. 3 is a right side view of the front wheel 13 illustrating a state in which the brake disc 53 is attached. FIG. 4 is a right side view of the front wheel 13 illustrating a state in which the brake disc 53 on the right side is removed from FIG. 3. FIG. 5 is a right side view of the front wheel 13 illustrating a state in which wheel covers 80 and the brake discs 53 on both the left and right sides are removed from FIG. 4. Note that, in FIG. 4, the wheel cover 80 is shaded. In FIG. 5, the wheel 60 is shaded.

In the following description, the front side in the rotation direction refers to a direction in which the front wheel 13 rotates in a case where the saddle-ride vehicle 10 advances forward. In addition, a direction opposite thereto is referred to as a rear side in the rotation direction. In the drawing, the front side in the rotation direction is indicated by an arrow R1, and the rear side in the rotation direction is indicated by an arrow R2.

In addition, the axial direction of the axle 13a is simply referred to as an axial direction. Furthermore, in the present embodiment, the axial direction and the vehicle width direction are used for a case where the saddle-ride vehicle 10 travels straight in an upright state. Thus, the axial direction and the vehicle width direction are the same direction in the present embodiment.

The front wheel 13 includes a wheel 60 rotatably supported by the axle 13a and a tire 70 supported by the wheel 60.

As illustrated in FIG. 5, the wheel 60 includes a hub 61 rotatably supported by the axle 13a, a rim 62 disposed coaxially with the hub 61 and to which the tire 70 is attached, and a plurality of spokes (not illustrated) connecting the hub 61 and the rim 62.

The outer appearance of the hub 61 is a bottomed cylindrical shape extending in the vehicle width direction. The hub 61 includes an outer peripheral wall portion 63 corresponding to a side surface of the bottomed cylindrical shape, and a pair of left and right side wall portions 64 corresponding to the bottom surface of the bottomed cylindrical shape. The pair of left and right side wall portions 64 are formed with an axial tubular portion 65 that protrudes at the radial center portion outward in the vehicle width direction. The pair of left and right axial tubular portions 65 communicate with each other in the axial direction. The axle 13a (see FIG. 1) is inserted through the axial tubular portion 65. A disc fastening portion 66 protruding in the radial direction is formed on the outer peripheral side of the axial tubular portion 65. The disc fastening portion 66 is formed in a pedestal shape protruding outward in the vehicle width direction with respect to the side wall portion 64. In the present embodiment, three disc fastening portions 66 are formed. The disc fastening portions 66 are formed at equal intervals in the circumferential direction. A fastening hole 66a extending in the vehicle width direction is formed in the disc fastening portion 66.

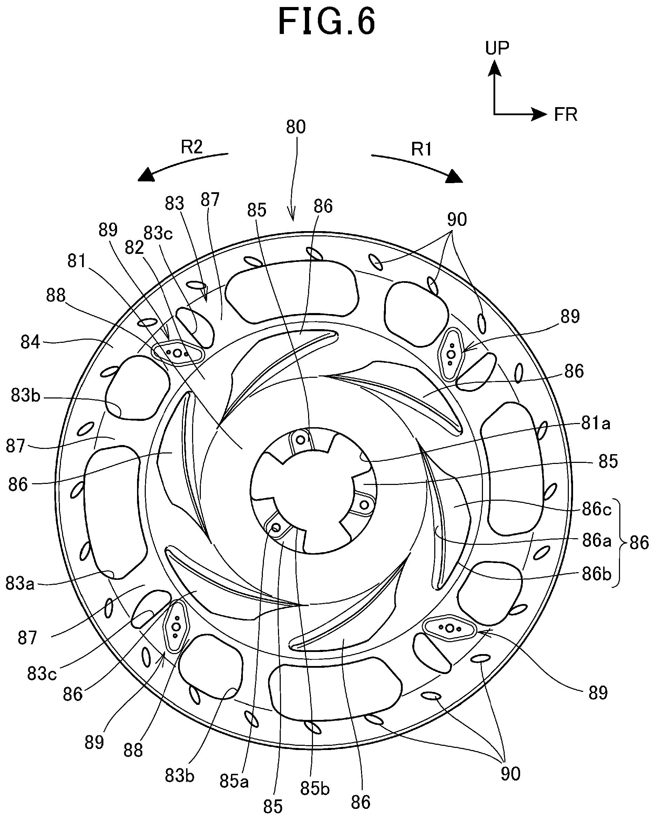

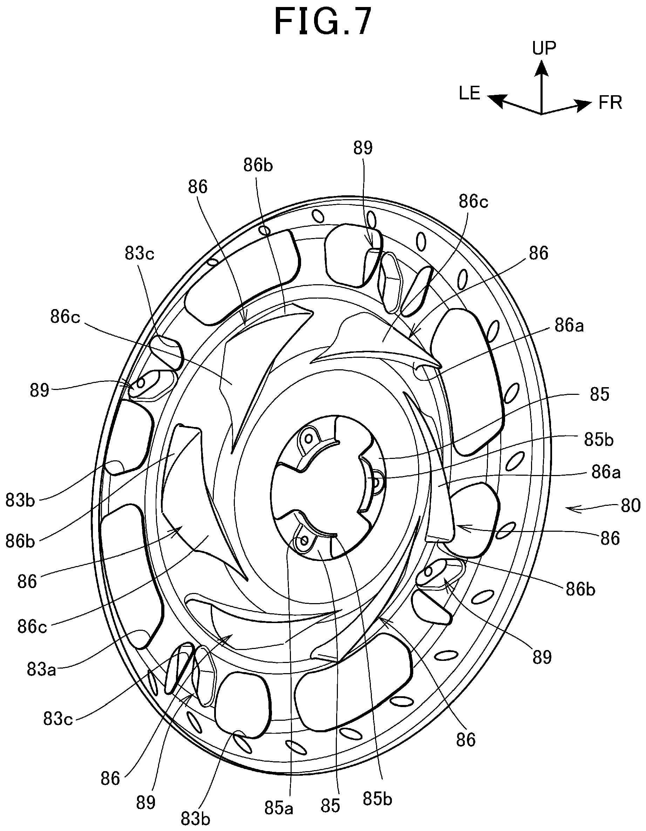

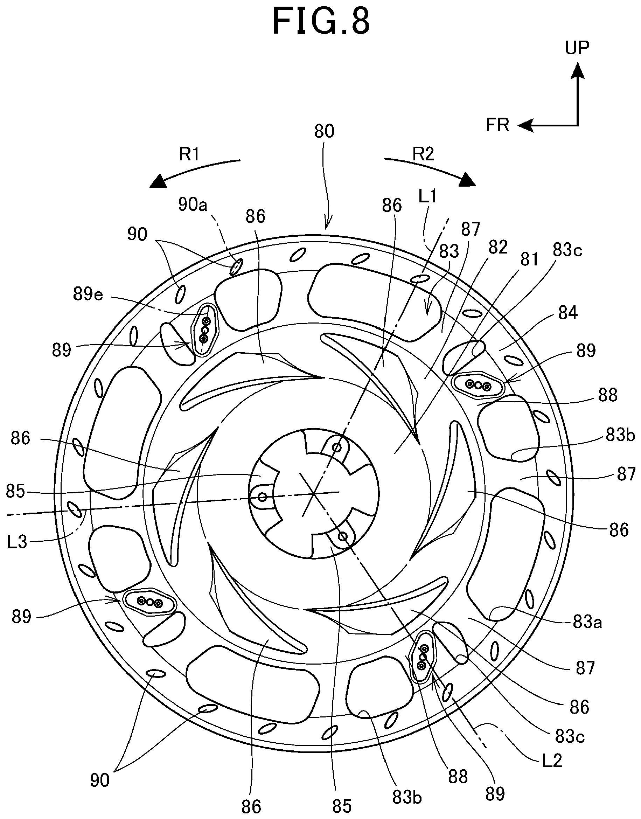

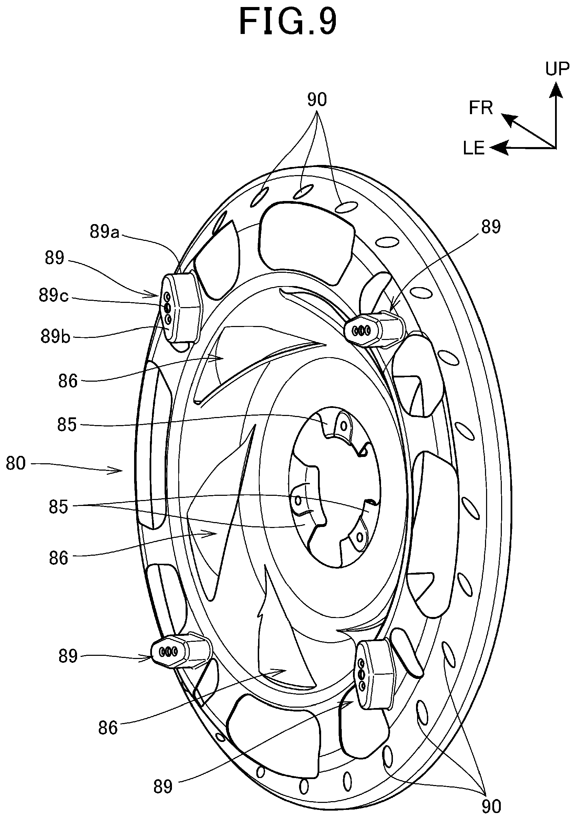

FIG. 6 is a right side view of the right wheel cover 80. FIG. 7 is a perspective view of the right wheel cover 80 as viewed from the right rear. FIG. 8 is a left side view of the right wheel cover 80. FIG. 9 is a perspective view of the right wheel cover 80 as viewed from the left rear. FIGS. 8 and 9 illustrate the inner side surface of the right wheel cover 80 in the vehicle width direction, and illustrate a back side surface of FIGS. 6 and 7.

The wheel cover 80 is attached to the side surface of the wheel 60. The wheel cover 80 is a cover member that entirely covers the side surface of the wheel 60. In other words, the wheel cover 80 is a cover member that covers the wheel 60 from the outside in the vehicle width direction from the hub 61 to the rim 62. In the present embodiment, the wheel covers 80 are attached to the left and right sides of wheel 60 according to the left and right disc brakes 51 and 52. The right wheel cover 80 and the left wheel cover 80 have the same basic structure. The left and right wheel covers 80 are basically configured to be bilaterally symmetrical.

The wheel cover 80 is formed in a disc shape having irregularities. The wheel cover 80 of the present embodiment is formed in a circular shape in side view (as viewed in the axial direction of the axle 13a). The outer diameter of the wheel cover 80 of the present embodiment is smaller than the outer diameter of the wheel 60 and larger than the outer diameter of the brake disc 53. An outer peripheral end 84a of the wheel cover 80 forms a gap S1 with the wheel 60 in side view (see FIGS. 2 to 4).

As illustrated in FIG. 6, the wheel cover 80 includes an inner peripheral portion 81 formed on the radial center side, a tapered portion 82 formed on the radial outside of the inner peripheral portion 81, a connection portion (cover surface) 83 formed on the radial outside of the tapered portion 82, and an outer peripheral portion 84 formed on the radial outside of the connection portion 83.

A center hole 81a penetrating in the axial direction is formed at the radial center portion of the inner peripheral portion 81. A plurality of piece-shaped fastening portions (central fixing portions) 85 protruding radially inward are formed at a radially inner end of the inner peripheral portion 81. In the present embodiment, three fastening portions 85 are formed. The fastening portions 85 are formed at equal intervals in the circumferential direction. A fixing hole 85a penetrating in the vehicle width direction is formed in the fastening portion 85. For example, in the fastening portion 85, a nut (not illustrated) is attached to the inner surface of the fastening portion 85 in the vehicle width direction. Accordingly, the fastening member inserted through the fixing hole 85a is configured to be fastenable to the fastening portion 85. A tube holding portion 85b bent outward in the vehicle width direction is formed at a radially inner end of the fastening portion 85. The axial tubular portion 65 of the hub 61 is inserted into a space surrounded by a plurality of tube holding portions 85b, that is, the center hole 81a. In addition, the disc fastening portion 66 of the hub 61 can enter a space sandwiched between the fastening portion 85 and the fastening portion 85 in the circumferential direction.

The tapered portion 82 has an annular shape in side view. The tapered portion 82 has a tapered shape that is inclined toward the central portion in the vehicle width direction as it progresses radially outward. The tapered portion 82 is formed with a plurality of protruding portions (first convex portions) 86 formed at equal intervals in the circumferential direction. The protruding portion 86 of the present embodiment has a fin shape. That is, the protruding portion 86 has a so-called streamlined outer shape. The protruding portion 86 is formed in a shape in which the inner surface of the tapered portion 82 in the vehicle width direction is recessed and protrudes outward in the vehicle width direction.

The protruding portion 86 of the present embodiment includes an inner end surface 86a on the radially inner side, an outer end surface 86b extending from the radially outer end of the inner end surface 86a to the rear side in the rotational direction, and a connection surface 86c extending from the outer ends of the inner end surface 86a and the outer end surface 86b in the vehicle width direction and connected to the tapered portion 82.

The inner end surface 86a is formed in a standing wall shape with respect to the outer surface of the tapered portion 82. The inner end surface 86a is a wall surface along the axial direction. Specifically, the inner end surface 86a is slightly inclined radially outward as it progresses in the axial direction. The inner end surface 86a extends in a tangential direction of a circle concentric with the wheel cover 80. Accordingly, the inner end surface 86a can easily cross the tapered portion 82 while securing a length as compared with the case of extending in the radial direction. The protruding amount of the inner end surface 86a with respect to the tapered portion 82, that is, the length in the axial direction increases as it progresses radially outward.

The outer end surface 86b is formed in a standing wall shape with respect to the tapered portion 82. The outer end surface 86b is a wall surface along the axial direction. The protruding amount of the outer end surface 86b with respect to the tapered portion 82 decreases as it progresses rearward in the rotational direction.

The protruding amount of the connection surface 86c with respect to the tapered portion 82 decreases as it progresses radially outward.

The connection portion 83 is formed radially outside the tapered portion 82. The connection portion 83 includes first leg portions 87 formed at equal intervals in the circumferential direction and second leg portions 88 formed between predetermined sets of first leg portions 87.

The first leg portion 87 extends in the radial direction. The first leg portion 87 extends from the radially outer end of the tapered portion 82 and is connected to the radially inner end of the outer peripheral portion 84. In the present embodiment, eight first leg portions 87 are formed. At the radially inner end portion of the first leg portion 87, a circumferential width gradually increases as it progresses radially inward. At the radially outer end portion of the first leg portion 87, a circumferential width gradually increases as it progresses radially outward.

The second leg portion 88 extends in the radial direction. The second leg portion 88 extends from the radially outer end of the tapered portion 82 and is connected to the radially inner end of the outer peripheral portion 84. The second leg portion 88 is formed adjacent to a predetermined first leg portion 87. In the present embodiment, four second leg portions 88 are formed. Thus, the second leg portions 88 are formed at equal intervals in the circumferential direction.

In the adjacent leg portions 87 and 88, a first vent hole 83a is formed by a surrounding shape of the first leg portion 87 on the front side in the rotational direction, the first leg portion 87 on the rear side in the rotational direction, the tapered portion 82, and the outer peripheral portion 84. In the adjacent leg portions 87 and 88, a second vent hole 83b is formed by a surrounding shape of the second leg portion 88 on the front side in the rotational direction, the first leg portion 87 on the rear side in the rotational direction, the tapered portion 82, and the outer peripheral portion 84. Furthermore, in the adjacent leg portions 87 and 88, a third vent hole 83c is formed by a surrounding shape of the first leg portion 87 on the front side in the rotational direction, the second leg portion 88 on the rear side in the rotational direction, the tapered portion 82, and the outer peripheral portion 84.

In other words, in the connection portion 83, the first vent hole 83a, the second vent hole 83b, and the third vent hole 83c are formed at predetermined intervals in the circumferential direction. Accordingly, a plurality of first leg portions 87 and a plurality of second leg portions 88 are formed in the connection portion 83.

The second leg portion 88 is formed with an outer fastening portion (outer fixing portion) 89 that is recessed inward in the vehicle width direction and protrudes inward in the vehicle width direction. The outer fastening portions 89 are formed in the second leg portion 88 and are formed at equal intervals in the circumferential direction. In the present embodiment, the number of outer fastening portions 89 is different from the number of fastening portions 85. Four outer fastening portions 89 are formed. The outer fastening portion 89 is basically positioned to be deviated in the circumferential direction with respect to the fastening portion 85. Note that, in FIG. 8, lines L1, L2, and L3 extending from the fastening portions 85 in the radial direction indicate the same positions in the circumferential direction as those of the respective fastening portions 85.

The outer fastening portion 89 has a fin shape extending in the circumferential direction in side view. In the present embodiment, the outer fastening portion 89 has a substantially elliptical shape in side view. The substantially elliptical shape means a shape having a longitudinal shape and capable of defining a major axis having a maximum length of the longitudinal shape and a minor axis intersecting at the central portion of the major axis in a longitudinal direction and having a maximum length in a lateral direction. Thus, the substantially elliptical shape is not limited to a shape in which the outer shape is curved, and a part of the outer shape may be a planar shape.

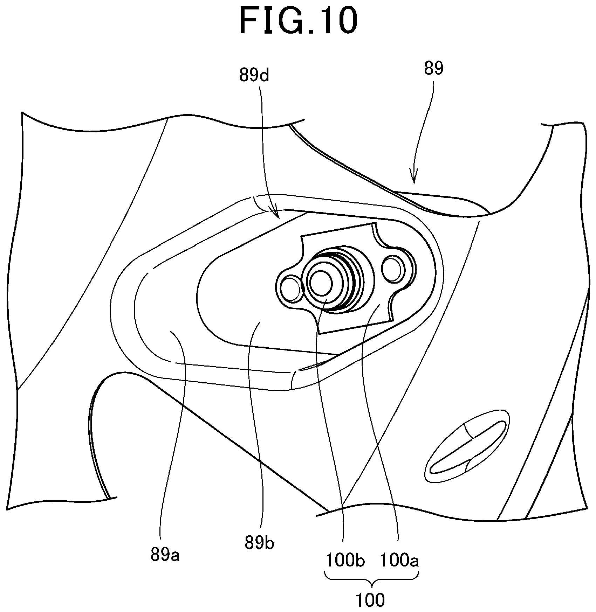

As illustrated in FIG. 9, the outer fastening portion 89 has a tubular portion 89a having a substantially elliptical cross section and protruding inward in the vehicle width direction, and a contact surface 89b that closes the inner end of the tubular portion 89a in the vehicle width direction. An insertion hole 89c penetrating in the vehicle width direction is formed in the contact surface 89b. The tubular portion 89a and the contact surface 89b form a fastening member accommodating portion 89d (see FIG. 10). The outer fastening portion 89 is inclined such that a major axis 89e (see FIG. 8) becomes radially outward as it progresses rearward in the rotation direction.

FIG. 10 is an enlarged perspective view of the fastening member accommodating portion 89d of the outer fastening portion 89.

A floating nut 100 is accommodated in the fastening member accommodating portion 89d. In the present embodiment, the floating nuts 100 are accommodated in all the fastening member accommodating portions 89d of the left wheel cover 80. The floating nut 100 is fixed to the contact surface 89b. In the present embodiment, the floating nut 100 is riveted to the contact surface 89b.

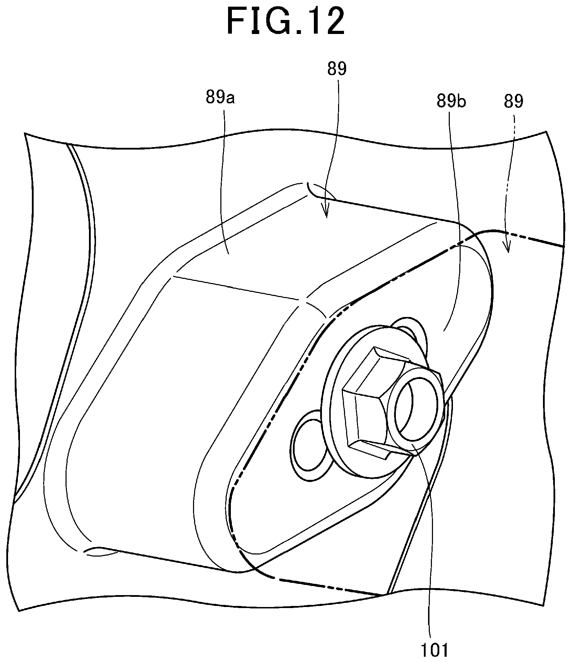

Note that, the floating nut 100 includes a base portion 100a to be fixed and a nut portion 100b movably supported by the base portion 100a within a predetermined range. Since the movable range of the nut portion 100b is restricted with respect to the base portion 100a, it is possible to absorb the positional deviation of the axial center of a bolt 101 (see FIG. 12).

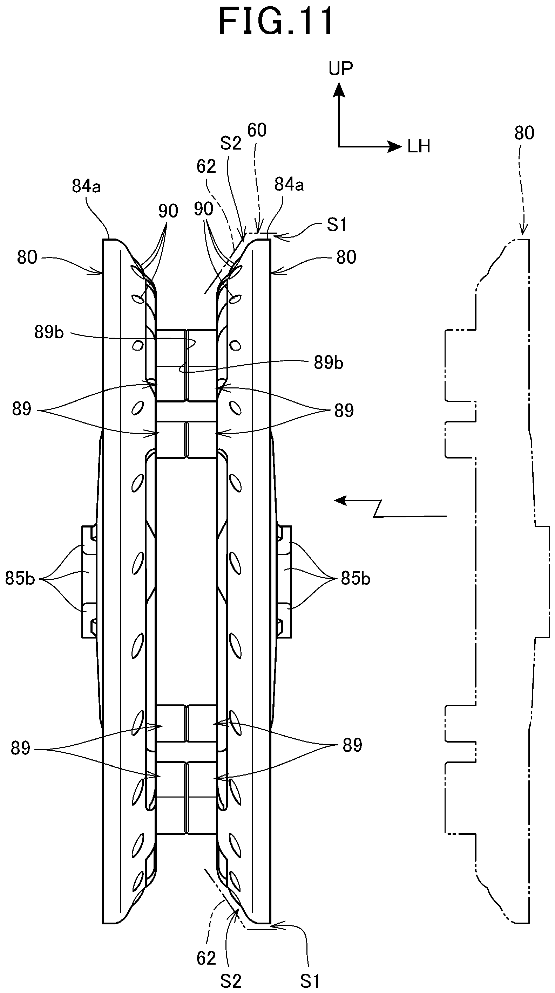

As illustrated in FIGS. 6 to 9, the outer peripheral portion 84 (see FIG. 6) is formed radially outside the connection portion 83. The outer peripheral portion 84 has an annular shape in side view. The outer peripheral portion 84 has a tapered shape inclined outward in the vehicle width direction as it progresses radially outward. In other words, the outer peripheral portion 84 is inclined along the side surface shape of the rim 62 of the wheel 60. The outer peripheral portion 84 can face the rim 62 of the wheel 60 (see FIGS. 4 and 11). Note that, in FIG. 11, only the shape of the rim 62 on one side is illustrated.

A plurality of bulging portions (second convex portions) 90 are formed at equal intervals in the circumferential direction in the outer peripheral portion 84. The bulging portion 90 bulges inward in the vehicle width direction from the inner surface of the outer peripheral portion 84. In other words, the bulging portion 90 bulges toward the rim 62 of the wheel 60. The bulging portion 90 is formed in a substantially elliptical shape in side view. The bulging portion 90 is inclined such that a major axis 90a (see FIG. 8) becomes radially outward as it progresses rearward in the rotation direction. The major axis 90a of the bulging portion 90 is inclined along the circumferential direction compared to the major axis 89e of the outer fastening portion 89.

FIG. 11 is a front view of the wheel cover 80 illustrating an assembled state of the wheel cover 80. FIG. 12 is an enlarged perspective view of the contact surface 89b of the outer fastening portion 89.

Next, an example of a method of assembling the wheel cover 80 will be described.

The left and right wheel covers 80 are disposed on the left and right sides of the wheel 60, respectively. Then, in the wheel cover 80, the axial tubular portion 65 of the hub 61 is inserted through the center hole 81a. At this time, the rotational angle of the wheel cover 80 is adjusted such that the disc fastening portion 66 of the hub 61 enters between the fastening portions 85. In a state where the disc fastening portion 66 enters between the fastening portions 85, the tube holding portion 85b of the wheel cover 80 comes into contact with the outer periphery of the axial tubular portion 65. Thus, the wheel cover 80 is held to the wheel 60 by the tube holding portion 85b. In addition, the outer fastening portions 89 of the left and right wheel covers 80 face each other.

In this state, the bolt 101 as an example of a fastening member is inserted through the outer fastening portion 89. In the present embodiment, the bolt 101 is inserted from the right wheel cover 80. The bolt 101 passes through the left insertion hole 89c from the right insertion hole 89c and is fastened to the floating nut 100 of the left wheel cover 80. Accordingly, the right wheel cover 80 and the left wheel cover 80 are fastened with a predetermined margin. At this time, the head portion of the bolt 101 is accommodated in the fastening member accommodating portion 89d of the right outer fastening portion 89. In addition, the shaft portion of the bolt 101 is accommodated in the fastening member accommodating portion 89d of the left outer fastening portion 89.

When the left and right wheel covers 80 are fastened, the contact surfaces 89b of the left and right outer fastening portions 89 come into contact with each other (see FIG. 11). In addition, in the outer peripheral portion 84 of the wheel cover 80, the bulging portion 90 comes into contact with the rim 62 of the wheel 60. Thus, a gap S2 (see FIGS. 4 and 11) is formed between the bulging portion 90 and the wheel 60. In addition, even when the radially outer end side of the wheel cover 80 is to be deformed in the vehicle width direction, the gap S2 between the wheel cover 80 and the wheel 60 is easily maintained constant by the bulging portion 90.

Next, the brake disc 53 is attached to the wheel 60. The brake disc 53 is fastened to the disc fastening portion 66 of the hub 61 with a bolt (not illustrated) inserted through a predetermined fixing hole 53a. In addition, the brake disc 53 is fastened to the fastening portion 85 of the wheel cover 80 with a bolt (not illustrated) inserted through a predetermined fixing hole 53a. Thus, the brake disc 53 is attached to the hub 61 of the wheel 60 in the state of supporting the wheel cover 80.

That is, in the present embodiment, the wheel cover 80 is fastened to the hub 61 of the wheel 60 via the brake disc 53. Note that, on one of the left and right sides, a pulser ring (not illustrated) is fastened together with the brake disc 53.

The wheel cover 80 is fastened with a positional deviation in the radial direction by the fastening portion 85 on the radially center side and the outer fastening portion 89 on the radially outer side. Therefore, the rigidity of the plate-shaped wheel cover 80 can be easily secured. In particular, in the present embodiment, the outer fastening portion 89 is basically positioned to be deviated in the circumferential direction with respect to the fastening portion 85. Therefore, it is easy to fasten the wheel cover 80 in a state where the displacement of a fastening place with respect to the entire surface is suppressed. Thus, the rigidity of the wheel cover 80 can be more easily secured. In addition, there are many fastening places, and the fastening rigidity of the wheel cover 80 is also increased. The fastening portion 85 and the outer fastening portion 89 are separated from each other in the radial direction, and a tolerance of one easily affects the other. However, since the floating nut 100 allows for a margin, a work of fastening the wheel 60 to the hub 61 is facilitated.

In this manner, the left and right wheel covers 80 are attached to the wheel 60.

In the saddle-ride vehicle 10, as the brake caliper 54 clamps the brake disc 53 during traveling, the brake disc 53 is heated to a high temperature by frictional heat and dissipates heat. In the present embodiment, the wheel cover 80 entirely covers the side surface of the wheel 60, so that the heat from the brake disc 53 is easily shielded by the wheel cover 80. Thus, the heat from the brake disc 53 is less likely to be transferred to the wheel 60, and the heat from the brake disc 53 is suppressed from being transferred to the tire 70. In particular, as in the present embodiment, in the large-diameter brake disc 53, the brake disc 53 is close to the tire 70.

For this reason, heat is easily transferred from the brake disc 53 to the tire 70, but the wheel cover 80 makes it easier to more suitably suppress the transfer of the heat to the tire 70.

In addition, traveling wind can enter between the wheel cover 80 and the brake disc 53. Between the wheel cover 80 and the brake disc 53, when the front wheel 13 rotates, the fin shape of the protruding portion 86 allows the traveling wind to be gathered on the inner end surface 86a side of the protruding portion 86 and the traveling wind around the brake disc 53 to be discharged radially outward, so that the brake disc 53 can be easily cooled appropriately.

In addition, in the present embodiment, the gap S2 (see FIGS. 2, 4, and 11) leading to the gap S1 (see FIGS. 4 and 11) is generated between the wheel cover 80 and the rim 62 of the wheel 60.

Thus, traveling wind easily flows in and out between the wheel cover 80 and the wheel 60 through the gaps S1 and S2. The traveling wind having entered the gaps S1 and S2 is easily released radially outward due to the inclined shape of the fin shape of the outer fastening portion 89 and the substantially elliptical inclined shape of the bulging portion 90. Thus, high-temperature air hardly remains between the wheel 60 and the wheel cover 80.

Furthermore, the vent holes 83a to 83c are formed in the wheel cover 80. The radial inside of the vent holes 83a to 83c is covered from the outside in the vehicle width direction with the brake disc 53. Thus, the radially outer portions of the vent holes 83a to 83c communicate with the left and right. Accordingly, even if the wheel cover 80 which entirely covers the side surface of the wheel 60 is provided, air can pass through the wheel cover 80 to the left and right. Therefore, it is easy to contribute to steering stability when the saddle-ride vehicle 10 turns.

As described above, according to the present embodiment to which the present invention is applied, in the saddle-ride vehicle including the wheel 60 having the hub 61 and supported by the axle 13a, the brake disc 53 attached to the hub 61, the brake caliper 54 capable of clamping the brake disc 53, and the wheel cover 80 held between the hub 61 and the brake disc 53 and covering the side surface of the wheel 60, the wheel cover 80 is formed larger than the brake disc 53 and forms the gap S1 with the wheel 60 at the outer peripheral end 84a, and the wheel cover 80 is provided with the vent holes 83a, 83b, and 83c penetrating the connection portion 83 in the direction of the axle 13a.

According to this configuration, it is possible to easily cover the entire side surface of the wheel 60 while securing steering stability by the vent holes 83a, 83b, and 83c. Thus, it is possible to provide the saddle-ride vehicle 10 capable of easily shielding the heat dissipation of the disc brakes 51 and 52 from the wheel 60 and suppressing the influence of the heat dissipation of the disc brakes 51 and 52 on the tire 70. It is possible to provide the saddle-ride vehicle capable of easily shielding heat dissipation of the disc brake from the wheel and suppressing an influence on the tire.

In the present embodiment, the wheel cover 80 is provided with the protruding portion 86 extending in the circumferential direction of the axle 13a on the radially outer side of the axle 13a.

According to this configuration, the protruding portion 86 extending in the circumferential direction not from the center of the axle 13a but from a position separated by a predetermined distance from the axle 13a is provided, so that the circumferential length of the protruding portion 86 can be easily secured. Thus, when the wheel 60 rotates, air can be easily moved along the protruding portion 86, and the brake disc 53 can be appropriately cooled.

In addition, in the present embodiment, the protruding portion 86 has a fin shape.

According to this configuration, an air discharging effect by the protruding portion 86 can be enhanced.

In addition, in the present embodiment, the bulging portion 90 protruding toward the wheel 60 is provided on the inner surface of the outer peripheral portion 84 of the wheel cover 80.

According to this configuration, it is possible to easily maintain the gap S2 between the wheel 60 and the wheel cover 80 by the bulging portion 90, and it is possible to easily improve the heat dissipation effect of the wheel 60 by securing the inflow and outflow of air between the wheel 60 and the wheel cover 80.

In the present embodiment, the wheel cover 80 includes the fastening portion 85 on the radial center side and the outer fastening portion 89 provided on the radial outside of the fastening portion 85.

According to this configuration, the rigidity of the wheel cover 80 can be easily secured, and the fixing strength can be easily improved.

Further, in the present embodiment, a pair of the wheel covers 80 are provided on left and right sides with the wheel 60 interposed therebetween, in each of the pair of left and right wheel covers 80, the fastening portion 85 is fixed to the hub 61, and the outer fastening portions 89 of the facing wheel covers 80 are fixed to each other in a floating manner.

According to this configuration, the workability of the fixing work between the fastening portion 85 and the outer fastening portion 89 at different positions in the radial direction can be improved.

In the present embodiment, the outer fastening portion 89 protrudes toward the opposing wheel cover 80, and the outer fastening portion 89 has a fin shape extending in the circumferential direction as viewed in the axial direction of the axle 13a.

According to this configuration, it is possible to add an air discharging effect to the outer fastening portion 89 which is floatingly fixed.

In the present embodiment, a plurality of fastening portions 85 are provided at intervals in the circumferential direction, a plurality of the outer fastening portions 89 are provided at intervals in the circumferential direction, and at least one of the outer fastening portion 89 is deviated in the circumferential direction from the circumferential position of the fastening portion 85.

According to this configuration, as compared with a case where the fastening portion 85 and the outer fastening portion 89 are all provided at the same position in the circumferential direction, it is possible to suppress the displacement of the fixing place in the circumferential direction. Thus, the entire surface of the wheel cover 80 can be easily fixed by the fastening portion 85 on the center side and the outer fastening portion 89, the rigidity of the wheel cover 80 can be easily secured, and the fixing strength can be easily improved.

### [Other Embodiment]

The above-described embodiment merely describes one aspect of the present invention and can be optionally modified and applied without departing from the scope of the present invention.

In the above embodiment, the configuration has been described in which the wheel cover 80 is fastened to the hub 61 of the wheel 60 via the brake disc 53, but the present invention is not limited thereto. For example, a fastening portion may be further provided between the disc fastening portions 66 of the hub 61 in the circumferential direction, and the wheel cover 80 may be directly fastened to the fastening portion of the hub 61.

In the above embodiment, the configuration has been described in which the wheel covers 80 are provided on the left and right sides of the wheel 60, but the wheel cover 80 may be provided only on one of the left and right side. For example, in a case where the disc brake is disposed only on one side, the wheel cover 80 may be provided only on one side.

In the above embodiments, the description has been given with regard to a motorcycle including the front wheel 13 and the rear wheel 15 as an example of the saddle-ride vehicle 10. However, the present invention is not limited thereto. The present invention is applicable to a three-wheel saddle-ride vehicle including two front wheels or two rear wheels or a saddle-ride vehicle including four or more wheels.

### REFERENCE SIGNS LIST

- 10: Saddle-ride vehicle
- 13a: Axle
- 53: Brake disc
- 54: Brake caliper
- 60: Wheel
- 61: Hub
- 80: Wheel cover
- 83: Connection portion (cover surface)
- 83a: Vent hole
- 83b: Vent hole
- 83c: Vent hole
- 84: Outer peripheral portion
- 84a: Outer peripheral end
- 85: Fastening portion (central fixing portion)
- 86: Protruding portion (first convex portion)
- 89: Outer fastening portion (outer fixing portion)
- 90: Bulging portion (second convex portion)
- S1: Gap

## Claims

1. A saddle-ride vehicle comprising: a wheel (60) having a hub (61) and supported by an axle (13a); a brake disc (53) attached to the hub (61); a brake caliper (54) capable of clamping the brake disc (53); and a wheel cover (80) held between the hub (61) and the brake disc (53) and covering a side surface of the wheel (60),
the wheel cover (80) forms a gap (S1) with the wheel (60) at an outer peripheral end (84a),
the wheel cover (80) is provided with vent holes (83a, 83b, 83c) penetrating the cover surface (83) in a direction of the axle (13a), **characterized in that**
the wheel cover (80) is formed larger than the brake disc (53),
the wheel cover (80) includes a central fixing portion (85) on a radial center side, and an outer fixing portion (89) provided radially outside the central fixing portion (85),
a pair of the wheel covers (80) are provided on left and right sides with the wheel (60) interposed therebetween, and
in each of the pair of left and right wheel covers (80), the central fixing portion (85) is fixed to the hub (61), and the outer fixing portions (89) of the facing wheel covers (80) are fixed to each other in a floating manner.

2. The saddle-ride vehicle according to claim 1, wherein
the wheel cover (80) is provided with a first convex portion (86) extending in a circumferential direction of the axle (13a) on a radially outer side of the axle (13a).

3. The saddle-ride vehicle according to claim 2, wherein
the first convex portion (86) has a fin shape.

4. The saddle-ride vehicle according to claim 1, wherein
a second convex portion (90) protruding toward the wheel (60) is provided on an inner surface of an outer peripheral portion (84) of the wheel cover (80).

5. The saddle-ride vehicle according to claim 1, wherein
the outer fixing portion (89) protrudes toward the opposing wheel cover (80), and
the outer fixing portion (89) has a fin shape extending in a circumferential direction as viewed in an axial direction of the axle (13a).

6. The saddle-ride vehicle according to claim 1 or 5, wherein
a plurality of the central fixing portions (85) are provided at intervals in a circumferential direction,
a plurality of the outer fixing portions (89) are provided at intervals in the circumferential direction, and
at least one of the outer fixing portions (89) is deviated in the circumferential direction from a circumferential position of the central fixing portion (85).

## Patentansprüche

1. Sattelfahrzeug, umfassend: ein Rad (60), welches eine Radnabe (61) aufweist und durch eine Achse (13a) gehaltert ist; eine Bremsscheibe (53), welche an der Radnabe (61) befestigt ist; einen Bremssattel (54), welcher dazu in der Lage ist, die Bremsscheibe (53) festzuklemmen; und eine Radabdeckung (80), welche zwischen der Radnabe (61) und der Bremsscheibe (53) gehalten ist und welche eine seitliche Fläche des Rads (60) abdeckt,
wobei die Radabdeckung (80) an einem äußeren peripheren Ende (84a) mit dem Rad (60) einen Spalt (S1) bildet,
wobei die Radabdeckung (80) mit Belüftungslöchern (83a, 83b, 83c) bereitgestellt ist, welche die Abdeckungsfläche (83) in einer Richtung der Achse (13a) durchdringen, **dadurch gekennzeichnet, dass**
die Radabdeckung (80) größer als die Bremsscheibe (53) gebildet ist,
die Radabdeckung (80) einen zentralen Fixierabschnitt (85) an einer radialen Zentrumsseite und einen äußeren Fixierabschnitt (89) umfasst, welcher radial außerhalb des zentralen Fixierabschnitts (85) bereitgestellt ist,
ein Paar der Radabdeckungen (80) an einer linken und einer rechten Seite bereitgestellt ist, wobei das Rad (60) dazwischen eingefügt ist, und
in jeder aus dem Paar linker und rechter Radabdeckungen (80), der zentrale Fixierabschnitt (85) an der Radnabe (61) fixiert ist, und wobei die äußeren Fixierabschnitte (89) der zugewandten Radabdeckungen (80) miteinander in einer schwimmenden Weise fixiert sind.

2. Sattelfahrzeug nach Anspruch 1, wobei
die Radabdeckung (80) mit einem ersten konvexen Abschnitt (86) bereitgestellt ist, welcher sich in einer Umfangsrichtung der Achse (13a) an einer radial äußeren Seite der Achse (13a) erstreckt.

3. Sattelfahrzeug nach Anspruch 2, wobei
der erste konvexe Abschnitt (86) eine Flossenform aufweist.

4. Sattelfahrzeug nach Anspruch 1, wobei
ein zweiter konvexer Abschnitt (90), welcher in Richtung des Rads (60) hervorsteht, an einer inneren Fläche eines äußeren peripheren Abschnitts (84) der Radabdeckung (80) bereitgestellt ist.

5. Sattelfahrzeug nach Anspruch 1, wobei
der äußere Fixierabschnitt (89) in Richtung der entgegengesetzten Radabdeckung (80) hervorsteht, und
der äußere Fixierabschnitt (89) eine Flossenform aufweist, welche sich in einer Umfangsrichtung erstreckt, in einer axialen Richtung der Achse (13a) betrachtet.

6. Sattelfahrzeug nach Anspruch 1 oder 5, wobei
eine Mehrzahl der zentralen Fixierabschnitte (85) in einer Umfangsrichtung in Intervallen bereitgestellt sind,
eine Mehrzahl der äußeren Fixierabschnitte (89) in der Umfangsrichtung in Intervallen bereitgestellt sind, und
wenigstens einer der äußeren Fixierabschnitte (89) in der Umfangsrichtung von einer Umfangsposition des zentralen Fixierabschnitts (85) abgelenkt ist.

## Revendications

1. Véhicule à selle comportant : une roue (60) présentant un moyeu (61) et soutenue par un axe (13a) ; un disque de frein (53) fixé au moyeu (61) ; un étrier de frein (54) apte à serrer le disque de frein (53) ; et un enjoliveur (80) maintenu entre le moyeu (61) et le disque de frein (53) et recouvrant une surface latérale de la roue (60),
l'enjoliveur (80) forme un espace (S1) par rapport à la roue (60) sur une extrémité périphérique extérieure (84a),
l'enjoliveur (80) est doté de trous d'aération (83a, 83b, 83c) pénétrant la surface (83) d'enjoliveur dans une direction de l'axe (13a), **caractérisé en ce que**
l'enjoliveur (80) est conçu pour être plus grand que le disque de frein (53),
l'enjoliveur (80) inclut une partie de fixation centrale (85) sur un côté centre radial, et une partie de fixation extérieure (89) disposée radialement à l'extérieur de la partie de fixation centrale (85),
une paire des enjoliveurs (80) est disposée sur les côtés gauche et droit, la roue (60) étant interposée entre eux, et
dans chacun de la paire d'enjoliveurs gauche et droit (80), la partie de fixation centrale (85) est fixée au moyeu (61), et les parties de fixation extérieures (89) des enjoliveurs (80) en regard sont fixées l'une à l'autre de manière flottante.

2. Véhicule à selle selon la revendication 1, dans lequel
l'enjoliveur (80) est doté d'une première partie convexe (86) s'étendant dans une direction circonférentielle de l'axe (13a) sur un côté radialement extérieur de l'axe (13a).

3. Véhicule à selle selon la revendication 2, dans lequel
la première partie convexe (86) présente une forme d'ailette.

4. Véhicule à selle selon la revendication 1, dans lequel
une seconde partie convexe (90) faisant saillie vers la roue (60) est disposée sur une surface intérieure d'une partie périphérique extérieure (84) de l'enjoliveur (80).

5. Véhicule à selle selon la revendication 1, dans lequel
la partie de fixation extérieure (89) fait saillie vers l'enjoliveur (80) opposé, et
la partie de fixation extérieure (89) présente une forme d'ailette s'étendant dans une direction circonférentielle, telle que vue dans une direction axiale de l'axe (13a).

6. Véhicule à selle selon la revendication 1 ou 5, dans lequel
une pluralité des parties de fixation centrales (85) sont disposées à intervalles dans une direction circonférentielle,
une pluralité des parties de fixation extérieures (89) sont disposées à intervalles dans la direction circonférentielle, et
au moins une des parties de fixation extérieures (89) est décalée en direction circonférentielle d'une position circonférentielle de la partie de fixation centrale (85).
